Europäisches Patentamt

European Patent Office

Office européen des brevets

(19)

(11) Numéro de publication: **0 193 465**
**B1**

(12) **FASCICULE DE BREVET EUROPEEN**

(45) Date de publication du fascicule du brevet:
**22.03.89**

(51) Int. Cl.⁴: **B 23 Q 3/157**, B 23 Q 37/00

(21) Numéro de dépôt: **86400396.7**

(22) Date de dépôt: **25.02.86**

(54) Unité trois axes à commande numérique, notamment pour machine transfert et atelier flexible.

(30) Priorité: **28.02.85 FR 8502897**

(43) Date de publication de la demande:
**03.09.86 Bulletin 86/36**

(45) Mention de la délivrance du brevet:
**22.03.89 Bulletin 89/12**

(84) Etats contractants désignés:
**DE GB IT SE**

(56) Documents cités:
EP-A- 0 111 633
EP-A- 0 137 117
DE-A- 1 602 902
FR-A- 2 090 375
FR-A- 2 292 553
FR-A- 2 518 002
GB-A- 1 486 524
GB-A- 2 108 019
SU-A- 274 970
US-A- 4 216 572

WERKSTATTSTECHNIK. ZEITSCHRIFT FÜR
INDUSTRIELLE FERTIGUNG, vol. 74, no. 11, novembre
1984, pages 633-634, Springer-Verlag, Berlin, DE;
"Baukasten für flexible Systeme um
Bohrkopfwechselsystem ergänzt"

(73) Titulaire: **RENAULT AUTOMATION, 8/10 avenue Emile Zola, F-92109 Boulogne-Billancourt (FR)**

(72) Inventeur: **Marty, Gabriel, 20, rue Goya, F-81101 Castres (FR)**
Inventeur: **Cayre, Francis, Chemin des Vignes Saix, F-81100 Castres (FR)**

(74) Mandataire: **Réal, Jacques, Régie Nationale des Usines Renault SCE 0804, F-92109 Boulogne Billancourt Cedex (FR)**

(56) Documents cités: (suite)
SOVIET ENGINEERING RESEARCH, vol. 2, no. 8, août
1982, pages 68-70, Melton Mowbray, Leicestershire,
GB; D.A. KUPRIYANOV et al.: "Designing modular
construction NC machine tools"
WERKSTATTSTECHNIK. ZEITSCHRIFT FÜR
INDUSTRIELLE FERTIGUNG, vo2. 72, no. 12, décembre
1982, pages 673-678, Springer-Verlag, Berlin, DE; H.
TAUBER: "Bearbeitungszentren und Fertigungszellen
nach dem Baukastenprinzip"

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention se rapporte à une unité trois axes à commande numérique pour la réalisation d'opérations variables, en nombre limité, sur des pièces usinées en transfert ou en ateliers flexibles notamment.

Cette unité permet:
– une variation de composition et de positionnement pour des motifs Perçage-Lamage-Taraudage et des fraisages;
– un changement des outils cassés ou usés;
– un échange des têtes multiples;
– une modification de position de trous de perçage en diamètre et entr'axe;
– et un contrôle des bruts ou des usinages réalisés.

Cette unité peut s'inscrire de façon acceptable dans un pas d'une machine transfert. Rendue universelle, elle peut être ainsi ajustée sur une machine existante ou à la sortie d'une machine ou d'une chaîne (transfert) d'usinage.

Parmi les nombreuses applications possibles figurent les opérations suivantes:
– Fraisage d'une face par balayage (Boîte de vitesses...)
– Fraisage par contournage (Pompe à engrenages...)
– Fraisage point de départ en escalier (Culasse, porte-fusée...)
– Fraisage ébauche d'alésage
– Alésages de précision à entr'axe précis
– Détourages, filetages intérieur ou extérieurs
– Trous variables en position et en dimensions suivant les options.

Le document EP-A-0 111 633 décrit une machine électro-érosive dans laquelle les trois axes de déplacement relatif entre la broche et la pièce sont réalisés au moyen d'une table porte-pièce sur glissières x et y, et une broche à mouvement vertical z par rapport à sa console fixe. Il est également connu pour des machines électro-érosives adaptées pour recevoir de grandes pièces que la table pour la pièce soit fixe, et la console par contre se déplace au moyen de glissières sur le banc fixe selon les deux axes x et y.

L'invention propose une unité d'usinage trois axes à commande numérique prévue comme module constitutif d'un système flexible d'usinage du type comprenant un banc fixe pourvu de glissières, une console verticale, une poupée traversée par un coulisseau porte-broche guidé dans la poupée, un magasin rotatif à outillage monté sur la poupée et susceptible d'être traversé par un coulisseau, pour permettre au coulisseau de prendre ou remettre au magazin un outillage se trouvant sur son passage, ainsi que sur le banc fixe une face d'accouplement à un système flexible d'usinager.

Suivant une particularité essentielle, cette poupée est montée mobile verticalement sur des glissières de la console à double montant; que l'axe du coulisseau est horizontal; cette console est entraînée selon le troisième axe horizontalement sur les glissières du banc; et le magasin rotatif ceinture cette console.

Suivant une autre particularité de l'invention, chaque outillage est fixé sur le magasin rotatif par l'intermédiaire d'une plaque porte-outillage dont la section droite coïncide avec celle du coulisseau.

Suivant une autre particularité de l'invention, un même vérin de commande incorporé au coulisseau assure l'indexage de cette broche, le déblocage des outillages et le blocage de la plaque porte-outillage.

Suivant une autre particularité de l'invention, le mouvement en fin de course arrière du coulisseau commande mécaniquement le décrochage de la plaque porte-outillage de celui-ci et l'accrochage de cette plaque dans le magasin rotatif.

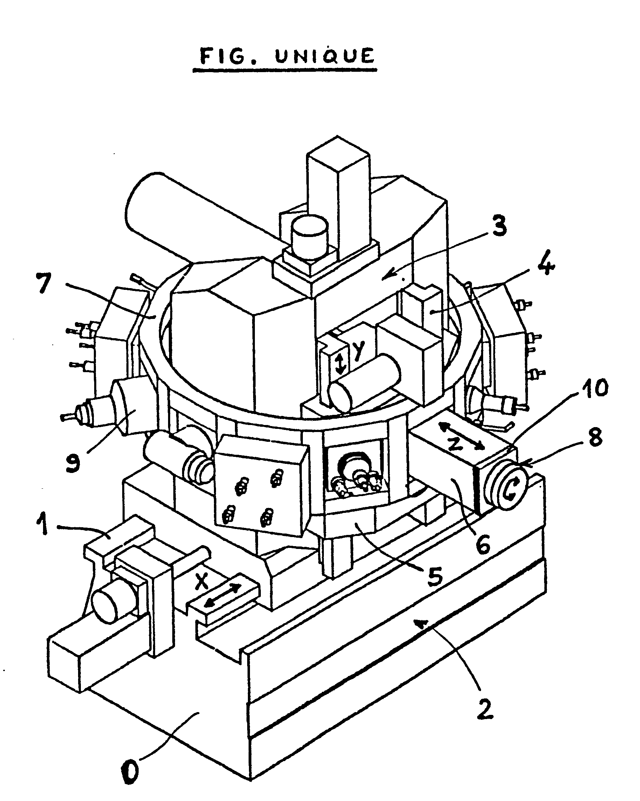

D'autres particularités de l'invention apparaîtront plus clairement avec les avantages en découlant, à la lecture de la description qui suit d'un mode de réalisation préférentiel, donné à titre d'exemple non limitatif en référence à la figure unique qui représente une vue en perspective de celui-ci.

Sur cette figure, l'architecture du module de base constituant cette unité trois axes X, Y, Z présente un banc fixe mécanosoudé 0, pourvu de glissières 1, X rapportées en acier traité et d'une face d'accouplement verticale 2.

Ce banc fixe est surmonté d'une console verticale 3 à double montant monobloc avec le trainard associé et pourvu de glissières 4, Y rapportées en acier traité.

Sur cette console 3 coulisse une poupée mobile 5 en fonte traversée par un coulisseau ou coulant 6, Z porte-broche 8 en acier traité de section carrée. Ce coulant porte un moteur de broche (servo-moteur sans balais).

Un magasin rotatif 7 à outillages 9 est embarqué sur cette poupée 5 et ceinture la console verticale 3.

Il n'y a pas de bras changeur d'outils car le coulant 6 passe à travers le magasin 7; le recul du coulant en fin de course autorise la rotation du magasin en vue de la sélection d'un autre outillage par le chemin le plus court.

Le module de base décrit ci-dessus est complété par des équipements conventionnels suivants:

Des vis à billes avec écrous précontraints sur paliers à butées préchargées sont prévues sur les trois axes X, Y, Z.

Les entraînements sont assurés par des servo-moteurs sans balais et couple de pignons. Les déplacements sont mesurés par codeur en bout de vis, ou en option par règles incrémentales.

L'entraînement et l'indexage du magasin 7 d'outillages sont assurés par servo-moteurs sans balais et réducteur, et la lecture de la position par codeur monté sur l'arbre de sortie du réducteur.

Le pilotage est réalisé par commande numérique à calculateur CNC quatre axes: X, Y, Z et magasin d'outillages.

L'équilibrage de la poupée mobile 5 et du magasin rotatif 7 est assuré par un vérin hydraulique. Le blocage des outillages est assuré par ressorts, le déblocage, par vérin hydraulique.

L'outillage équipant cette unité trois axes consite en des outils simples, des outils multiples et des outillages spéciaux.

Chaque outillage est monté sur une plaque porte-outillage 10 destinée à son accrochage dans le magasin rotatif 7.

– La section de cette plaque présente des dimensions égales à celles de la section droite du coulant 6. Quatre tirants parallèles à la broche 8 permettent le blocage des plaques 10 sur le coulant. L'arrosage

et la lubrification des plaques 10 passent par les logements des tirants.

- L'outil multiple est un montage de boîtiers multibroches sur la plaque porte-outillage.

Les outillages spéciaux comprennent:
- des têtes à renvoi d'angle pour des usinages à angles quelconques (perçage, alésage, fraisage), avec une interpolation linéaire sur deux ou trois axes. Cette solution permet d'éviter l'utilisation de tables porte-pièces ou de consoles inclinables;
- une ou des broches montées sur la plaque porte-outillages entraînées par multiplicateurs ou réducteurs par la broche de la machine;
- des systèmes de palpage pour positionnement par rapport au brut de la pièce ou par contrôle des cotes réalisées.

Un arrosage spécifique d'un outil simple est assuré par une ou deux buses montées sur la plaque porte-outillage 10.

Un apport de brouillard d'huile par la plaque est possible pour un outil multiple ou un outillage à grande vitesse.

Les avantages obtenus avec l'unité trois axes précédemment décrite se révèlent particulièrement importants.

* Le centrage des outils simples sur la broche 8 soit par cône et face, soit par des dentures frontale ou radiale, réduit considérablement le dégagement nécessaire au démontage des outillages à environ 30 mm (un centrage cône et face correspondant à un centrage dans un alésage conique court avec appui sur une face perpendiculaire à l'axe du cône).

Actuellement, les centres d'usinage sont équipés de cônes SA et le dégagement nécessaire au démontage dépasse 100 mm pour un cône SA 40, et 130 mm pour un cône SA 50 (le cône SA correspond à un emmanchement conique d'outils à conicité 7/24).

Il en résulte un gain de temps appréciable pour le démontage et le montage de ces outils. Par ailleurs, la rigidité d'un montage «cône et face» peut être meilleure que celle d'un montage par cône SA, à diamètre de centrage équivalent.

* L'indexage de la broche et le déblocage des outillages associés sont assurés par un même vérin de commande incorporé au coulant.

Les outillages étant maintenus par la plaque porte-outillages, il est possible de déclencher la commande de déblocage des outillages dès que ceux-ci sont dégagés de la pièce et que la broche est indexé pendant le recul de l'axe Z.

Ces deux fonctions sont réalisées simultanément et le contrôle de la position du vérin satisfait à celles-ci.

Il en résulte un gain de temps et un contrôle simplifié de ces deux fonctions.

* La plaque porte-outillage 10 permet:
- la fixation des outillages sur le magasin 7;
- l'arrosage par le centre ou par l'extérieur des outillages;
- la fixation des outillages lourds directement sur le coulant 6;
- l'alimentation en air pour la lubrification des outillages;
- l'indexage et le blocage simultanés de la broche pendant le recul du Z.

Sur les centres d'usinage, l'arrosage de l'outil est habituellement réalisé par des buses réparties autour de la broche, et orientées à la demande (en manuel) ou alimentées suivant la longueur des porte-outils.

Cette plaque porte-outillage permet donc un arrosage à la demande comme sur les machines transfert.

De plus, elle permet de fixer avec précision des cassettes multifonctionnelles sur le coulant.

En effet, les têtes multiples sur les centres d'usinage présentent de faibles dimensions et sont constituées d'un carter fixe immobilisé en rotation qui est maintenu par des roulements montés sur l'axe d'un cône SA. Cette solution procure un montage «léger» qui ne permet pas d'obtenir une grande précision.

Enfin, la broche reste disponible pour tous les travaux en mono-outil.

* Les avantages obtenus avec le magasin rotatif 7 à outillages sont nombreux:
- le coulant traverse le magasin; il permet la dépose et la prise des outillages à la volée;
- les outillages sont accessibles à l'arrière ou sur les côtés de la machine pour des opérations de réglage ou de changement;
- pour des usinages successifs sur une même ligne, le changement des outillages s'effectue sans action sur les axes X et Y, ce qui garantit ainsi une concentricité absolue des usinages;
- l'anneau du magasin est entièrement fermé; il protège ainsi la face avant de la broche et du coulant.

Ces derniers sont dissimulés au cours du changement d'outillage.

* Le coulant 6 coulisse dans la poupée mobile 5 et la fin de course arrière provoque mécaniquement le déverrouillage de la plaque porte-outillage 10 sur le coulant et l'accrochage de cette plaque dans le magasin 7.

Le système d'accrochage est donc purement mécanique.

Le système de verrouillage à commande mécanique est assisté hydrauliquement.

La partie mécanique qui va usiner, c'est-à-dire le coulant avec sa broche, un moteur et un outillage, présente une masse relative faible, ce qui autorise des accélérations élevées, donc des temps de positionnement courts en Z.

* La traverse supérieure qui relie les côtés du double montant permet le démontage de l'ensemble constitué par la poupée mobile 5 et le magasin 7 par le dessus.

La console à double montant porte les deux guidages X et Y. Ces deux axes de référence sont donc liés à une même pièce, d'où une bonne précision.

**Revendications**

1. Unité d'usinage trois axes (X, Y, Z) à commande numérique prévue comme module constitutif d'un système flexible d'usinage tel qu'un atelier flexible ou une machine transfert, du type comprenant un banc fixe (o) pourvu de glissières (1, X), une console verticale (3), une poupée (5) traversée par un coulisseau (6, Z) porte-broche (8) guidé dans la poupée (5), un magasin rotatif (7) à outillage (9) monté sur la poupée (5) et susceptible d'être traversé par le coulisseau (6), pour permettre au coulisseau (6) de prendre ou remettre au magasin (7) un outillage (9) se trouvant sur son passage, ainsi que sur le banc fixe (o) une face d'accouplement (2) à un système flexible d'usinage, caractérisé en ce que cette poupée (5) est montée mobile verticalement sur des glissières (4, Y) de la console (3) à double montant, que l'axe du coulisseau (6) est horizontal, que cette console est entraînée selon le troisième axe (X) horizontalement sur les glissières (1, X) du banc (o), et que ce magasin rotatif (7) ceinture cette console (3).

2. Unité trois axes suivant la revendication 1, caractérisé en ce que chaque outillage (9) est fixé sur le magasin rotatif (7) par l'intermédiaire d'une plaque porte-outillage (10) dont la section droite coïncide avec celle du coulisseau (6).

3. Unité trois axes suivant la revendication 2, caractérisée en ce qu'un même vérin de commande incorporé au coulisseau (6) assure l'indexage de cette broche, le déblocage des outillages (9) et le blocage des plaques porte-outillages (10).

4. Unité trois axes suivant l'une quelconque des revendications 1, 2 et 3, caractérisée en ce que le recul en fin de course arrière du coulisseau (6) commande mécaniquement le décrochage de la plaque porte-outillage (10) sur celui-ci et l'accrochage de cette plaque (10) sur le magasin rotatif (7).

5. Unité trois axes suivant l'une quelconque des revendications 1 à 4, caractérisée en ce que la plaque porte-outillage (10) permet l'arrosage de chaque outil par le centre ou par buses préréglées avec des liquides et des pressions appropriées.

6. Unité trois axes suivant l'une quelconque des revendications 1 à 5, caractérisée par un centrage d'outils simples sur la broche (8) du type à dentures frontales ou bien radiales, en vue de limiter le dégagement nécessaire au démontage de porte-outils (9).

7. Unité trois axes suivant l'une quelconque des revendications 1 à 5, caractérisée par un centrage d'outils simples sur la broche (8) du type «cône et face» en vue de limiter le dégagement nécessaire au démontage des porte-outils (9).

## Patentansprüche

1. Numerisch gesteuerte Dreiachsen-(X, Y, Z)-Bearbeitungseinheit, die als wesentliches Modul eines flexiblen Bearbeitungssystems vorgesehen ist, wie eine flexible Fertigungsanlage oder eine Transfermaschine, mit einer festen Bank (o), die mit Gleitkufen (1, X) versehen ist, mit einer senkrechten Konsole (3), mit einer Drehspindel (5), die von dem Schlitten (6, Z) durchsetzt wird, der einen Werkzeughalter (8) trägt, der in der Drehspindel (5) geführt ist, mit einem drehbaren Vorratsbehälter (7) für Werkzeuge (9), der an der Drehspindel (5) befestigt ist, und von dem Schlitten (6) durchsetzt wird, welcher aus dem Vorratsbehälter (7) ein Werkzeug (9) entnehmen oder zurückstellen kann, das sich in seinem Weg befindet, sowie auf der festen Bank (O) mit einer Ankoppelfläche (2) an ein flexibles Bearbeitungssystem, dadurch gekennzeichnet, daß die Drehspindel (5) in senkrechter Richtung beweglich auf Gleitkufen, (4, Y) der Konsole (3) mit doppeltem Ständer angeordnet ist, daß die Achse des Schlittens (6) waagrecht verläuft, daß die Konsole entlang der dritten Achse (X) waagrecht auf den Gleitkufen (1, X) der Bank (o) antreibbar ist und daß der drehbare Vorratsbehälter (7) die Konsole (3) umgibt.

2. Bearbeitungseinheit nach Anspruch 1, dadurch gekennzeichnet, daß jedes Werkzeug (9) am drehbaren Vorratsbehälter (7) mittels einer Halteplatte (10) befestigt ist, deren Querschnitt mit demjenigen des Schlittens (6) zusammenfällt.

3. Bearbeitungseinheit nach Anspruch 2, dadurch gekennzeichnet, daß derselbe im Schlitten (6) angeordnete Steuerzylinder die Anzeige des Trägers, die Freigabe des Werkzeuges (9) und das Einklemmen der Halteplatte (10) bewirkt.

4. Bearbeitungseinheit nach einem der Ansprüche 1, 2 und 3, dadurch gekennzeichnet, daß das Zurückziehen des Schlittens (6) am Ende seines Vorschubs mechanisch ein Freigeben der Halteplatte (10) bewirkt und eine Befestigung der Platte (10) am drehbaren Vorratsbehälter (7).

5. Bearbeitungseinheit nach einem der Ansprüche 1 bis 4, dadurch gekennzeichnet, daß die Halteplatte (10) ein Benetzen eines jeden Werkzeugs durch die Mitte oder durch einstellbare Düsen mit geeigneten Flüssigkeiten bei geeigneten Drucken gewährleistet.

6. Bearbeitungseinheit nach einem der Ansprüche 1 bis 5, gekennzeichnet durch eine einfache Werkzeugzentrierung auf dem Halter (8) mittels vorderen oder radialen Zähnen, um den zur Abnahme des Werkzeughalters (9) erforderlichen Freiraum zu begrenzen.

7. Bearbeitungseinheit nach einem der Ansprüche 1 bis 5, gekennzeichnet durch eine einfache Werkzeugzentrierung auf dem Halter (8) mittels Konus und Flächen, um den zur Abnahme des Werkzeughalters (9) erforderlichen Freiraum zu begrenzen.

## Claims

1. A numerical-control three-axis machining unit (X, Y, Z) provided as a component module of a flexible machining system such as a flexible workshop or a transfer machine, of the type comprising a fixed bed (o) provided with slides (1, X), a vertical support member (3), a head member (5) through which passes a spindle (8)-carrier slider (6, Z) guided in the head member (5), a rotary magazine (7) for a tool assembly (9) which is mounted on the head member (5) and which is capable of being traversed by the slider (6) to permit the slider (6) to take from or return to the magazine (7) a tool assembly (9) which is disposed on the path of movement thereof, and on the fixed bed (o) a face (2) for coupling to a flexible machining system, characterised in that said head member (5) is mounted movably vertically on slides (4, Y) of the double-upright support member (3), that the axis of the slider (6) is horizontal, that said support member is entrained in the direction of the third axis (X) horizontally on the slides (1, X) of the bed (o), and that said rotary magazine (7) surrounds said support member (3).

2. A three-axis unit according to claim 1 characterized in that each tool assembly (9) is fixed on the rotary magazine (7) by means of a tool assembly-carrier plate (10), the cross-section of which coincides with that of the slider (6).

3. A three-axis unit according to claim 2 characterized in that a single control jack which is incorporated in the slider (6) provides for indexing of said spindle, release of the tool assemblies (9) and locking of the tool assembly-carrier plates (10).

4. A three-axis unit according to any one of claims 1, 2 and 3 characterized in that the rearward end-of-travel return movement of the slider (6) mechanically controls disengagement of the tool assembly-carrier plate (10) thereon and engagement of said plate (10) on the rotary magazine (7).

5. A three-axis unit according to any one of claims 1 to 4 characterised in that the tool assembly-carrier plate (10) permits wetting of each tool by way of the centre or by nozzles which are preregulated with suitable liquids and pressures.

6. A three-unit axis according to any one of claims 1 to 5 characterised by centering of simple tools on the spindle (8) of the type having frontal or radial teeth, in order to limit the clearance required for dismantling of tool carriers (9).

7. A three-axis unit according to any one of claims 1 to 5 characterised by centering of simple tools on the spindle (8) of the 'cone-and-face' type in order to limit the clearance necessary for dismantling of the tool carriers (9).

# FIG. UNIQUE